**Europäisches Patentamt**

**European Patent Office**

**Office européen des brevets**

(11) Veröffentlichungsnummer: **0 146 513**
**A2**

## (12) EUROPÄISCHE PATENTANMELDUNG

(21) Anmeldenummer: **84850364.5**

(22) Anmeldetag: **26.11.84**

(51) Int. Cl.⁴: **B 23 K 9/10**

(30) Priorität: **28.11.83 SE 8306550**

(43) Veröffentlichungstag der Anmeldung: **26.06.85**
**Patentblatt 85/26**

(84) Benannte Vertragsstaaten: **AT BE CH DE FR GB IT LI NL**

(71) Anmelder: **ESAB Aktiebolag,**
**Box 8004 Herkulesgatan 72, S-402 77 Göteborg (SE)**

(72) Erfinder: **Karlsson, Rolf Lennart, Saltängsvägen 3 A,**
**S-695 00 Laxa (SE)**

(74) Vertreter: **Frisch, Kurt, c/o ESAB AB Box 8004,**
**Herkulesgatan 72 S-402 77 Göteborg (SE)**

(54) **Stromquelle für das Lichtbogenschweissen.**

(57) Eine Schweissstromquelle für das Lichtbogenschweissen ist über einen Gleichrichter (1) an ein Wechselstromnetz angeschlossen. An die Gleichspannungsklemmen ist eine Glättungskondensatoreinrichtung (8, 9) und eine Wechselrichtereinrichtung angeschlossen, in der die Gleichspannung in eine Wechselspannung mit höherer Frequenz, von beispielsweise über 15 kHz, umgewandelt wird. Die Wechselrichtereinrichtung besteht aus mehreren einzelnen Wechselrichtern (4, 5), deren Eingänge in Serie geschaltet sind. Die Glättungskondensatoreinrichtung besteht aus zwei oder mehreren in Serie geschalteten Kondensatoren (8, 9) und dient als Spannungsteiler. Die zwischen den Kondensatoren angeordneten Anschlüsse (12) sind mit entsprechenden Anschlüssen (3) zwischen den in Serie geschalteten Wechselrichtern (4, 5) verbunden. Die parallelgeschalteten Ausgänge der Wechselrichter sind an eine Schweissstelle (15, 16) angeschlossen.

ACTORUM AG

## Stromquelle für das Lichtbogenschweissen

Die Erfindung bezieht sich auf eine Schweissstromquelle für das Lichtbogenschweissen mit einem an ein Wechselstromnetz anschliessbaren Gleichrichter, einer an dessen Gleichstromklemmen angeschlossenen Parallelschaltung bestehend aus einer Glättungskondensatoreinrichtung und einer Wechselrichtereinrichtung für die Umwandlung der Gleichspannung in eine Wechselspannung, deren Frequenz wesentlich höher als die Netzfrequenz ist, wobei die Wechselrichtereinrichtung mit Halbleiterelementen, die von einem Steuergerät gesteuert werden, und mit einer Transformatoreinrichtung für die galvanische Trennung des Einganges der Wechselrichtereinrichtung von ihrem Ausgang ausgerüstet ist, an den nach fakultativer Serienschaltung eines Gleichrichters eine aus einem Werkstück und einer Schweisselektrode gebildete Schweissstelle anschliessbar ist.

Schweissstromquellen sind üblicherweise mit einem Transformator für die Herabsetzung der Netzspannung auf die geringere Schweissspannung ausgerüstet. Dank der Verwendung einer wesentlich höheren Frequenz wird die Baugrösse des Transformators im Vergleich zu der Baugrösse eines Transformators gleicher Leistung für Netzfrequenz wesentlich verringert. Als wesentlich höhere Frequenzen werden hier Frequenzen von mindestens 0,5 kHz verstanden. Es ist besonders zweckmässig eine Frequenz zu wählen, die mehr als 15 kHz beträgt und somit über der Hörbarkeitsschwelle liegt. Die höhere Frequenz gestattet im Vergleich zur Netzfrequenz eine raschere Regelung der Schweissparameter, insbesondere von Schweissstrom und Schweissspannung. Schweissstromquellen dieser Gattung sind beispielsweise durch US 4 159 409 und GB 2 046 535 bekannt geworden.

Die Verwendung einer höheren Frequenz bringt allerdings auch Nachteile mit sich. Die steuerbaren Halbleiterelemente für höhere Frequenzen sind teuer und haben in mancher Beziehung schlechtere Betriebswerte als entsprechende Halbleiterelemente für normale Netzfrequenzen. Insbesondere haben diese Halbleiterelemente schlechtere Kennwerte, was ihre Überlastungsfähigkeit durch Ausgleichsvorgänge, z.B. rasche Strom- und Spannungsänderungen, betrifft. Derartige Halbleiterelemente für normale Netzspannungen sind besonders teuer. Es ist dabei zu beachten, dass bei einer Netzwechselspannung von 380 V die geglättete Gleichspannung etwa 530 V beträgt. Da man bei der Dimensionierung der Halbleiterelemente auch auf die Schwankung der Netzspannung und auf Ausgleichsvorgänge Rücksicht nehmen muss, ist es erforderlich bei einer Netzspannung von 380 V die Halbleiterelemente für etwa 600 V und bei einer Netzspannung von 500 V für etwa 800 V auszulegen.

Insbesondere bei kleineren Schweissstromquellen, die in grossen Serien hergestellt werden, beeinflussen die Kosten der Halbleiterelemente für diese hohen Spannungen wesentlich den Gesamtpreis der Stromquelle. Es war daher besonders wünschenswert eine Stromquelle zu entwickeln, für die bei gleicher Netzspannung die billigeren Halbleiterelemente für niedrigere Betriebsspannungen verwendet können. Die weitere Entwicklung der Halbleiterelemente wird in der Zukunft wohl zu einer Verbilligung der Halbleiterelemente für hohe Spannungen führen. Es ist aber zu erwarten, dass sich das Preisverhältnis zwischen Halbleiterelementen für hohe und für niedrige Spannungen kaum ändern wird und somit die Halbleiterelemente für niedrige Spannungen auch weiterhin preislich wesentlich vorteilhafter sein werden.

Die vorliegende Erfindung hat sich somit zur Aufgabe gestellt eine billige Schweissstromquelle mit Wechselrichter zu schaffen, bei der diese preisgünstigeren Halbleiterelemente bei üblichen Netzspannungen verwendet
werden könnne. Die Lösung dieser Aufgabe besteht darin,
dass die Wechselrichtereinrichtung aus zwei oder mehreren
Wechselrichtern besteht, deren Eingänge in Serie geschaltet sind, und dass die Glättungskondensatoreinrichtung als Spannungsteiler dient, der aus zwei oder mehreren
in Serie geschalteten Kondensatoren besteht, wobei
zwischen den Kondensatoren angeordnete Anschlüssen mit
entsprechenden Anschlüssen zwischen den in Serie geschalteten Wechselrichtern verbunden sind. Jeder Wechselrichter liegt daher nur an einem Teil der Gesamtspannung
und es können daher Halbleiterelemente verwendet werden,
die lediglich für diese Teilspannungen auszulegen sind.

Es ist zweckmässig die Gesamtspannung durch den Spannungsteiler gleichmässig auf die in Serie geschalteten Wechselrichter aufzuteilen. Diese Aufteilung der Spannung wird
allerdings im Leerlauf gestört, wenn die Magnetisierungsströme der Transformatoren ungleich sind. In ähnlicher
Weise wird die gewünschte Aufteilung der Spannung auch
durch unterschiedliche Leckströme der Kondensatoren nachteilig beeinflusst. Dieser Störung wird gemäss der Ausführungsform der Erfindung dadurch abgeholfen, dass jedem
Glättungskondensator ein Widerstand parallel geschaltet
ist. Die Aufteilung der Spannung richtet sich im Leerlauf im wesentlichen nach der Grösse der Widerstände.

Gemäss einer weiteren vorteilhaften Ausführungsform der
Erfindung sind die Eingänge von zwei gleichartigen
Wechselrichtern in Serie geschaltet und Steuergeräte der
beiden Wechselrichter für die Steuerung der Halbleiterelemente zur wechselweisen Erzeugung von Spannungspulsen
an den Ausgängen der beiden Wechselrichter vorgesehen,
wobei zwischen jedem Ausgang und der Schweissstelle
ein Stromkreis bestehend aus einer Serienschaltung von
Gleichrichter und Schweissinduktor und einer mit dem Schweissinduktor zusammenwirkenden Freilaufdiode eingeschaltet ist.

Es hat sich gezeigt, dass ein Anschluss der beiden
Wechselrichter an einen gemeinsamen Schweissinduktor bei
ungleichen Steuerpulsen an die Halbleiterelemente der
Wechselrichter zu einer Instabilität des Potentiales
der Verbindungsklemme zwischen den beiden seriengeschalteten Wechselrichtern führt, was eine ungleiche
Spannungsverteilung auf die beiden Wechselrichter und
eine unerwünschte Spannungsbelastung zur Folge hat. Wenn
an die Ausgänge der beiden Wechselrichter je ein Schweissinduktor in Serie geschaltet wird, tritt diese Instabilität nicht auf.

Weitere Vorteile der Erfindung sind der nachfolgenden
Beschreibung einer Ausführungsform der Erfindung im
Zusammenhang mit der beigefügten Zeichnung zu entnehmen.

Fig. 1 zeigt etwas schematisch das Schaltbild einer
Stromquelle.

Fig. 2 ist ein detailliertes und etwas modifiziertes
Schaltbild der Stromquelle.

Ein Gleichrichter 1 ist an ein Einphasennetz 2 angeschlossen. Zwei mit einer Leitung 3 in Serie geschaltene
Wechselrichter 4, 5 sind mit Leitungen 6, 7 an den Gleichrichter 1 angeschlossen. Die Wechselrichter sind mit
steuerbaren Halbleiterelementen ausgerüstet. Wechselrichterschaltungen dieser Art sind allgemein bekannt.
Die Halbleiterelemente können Thyristoren und Transistoren sein.

Zwei in Serie geschaltene Glättungskondensatoren 8, 9
und mit diesen parallelgeschaltene Widerstände 10, 11
sind mit den Leitungen 6, 7 verbunden. Die Klemme 12
zwischen den Kondensatoren 8, 9 ist an die Leitung 3
angeschlossen.

Die Frequenz der von den Wechselrichtern 4, 5 abgegebenen Wechselspannung ist vorzugsweise 15 kHz oder höher. Die Wechselspannung wird in den entsprechenden Gleichrichter 13, 14 gleichgerichtet und einer aus Elektrode 15 und Werkstück 16 bestehenden Schweissstelle zugeführt. Die Widerstände 10, 11 sind gleich gross und die Spannung über jeden der beiden Wechselrichter ist daher auch ungefähr gleich gross. Geringfügige Abweichungen von diesen Spannungswerten treten auf wegen der im Takt mit der Wechselrichterfrequenz stattfindenden Ladung und Entladung der Kondensatoren.

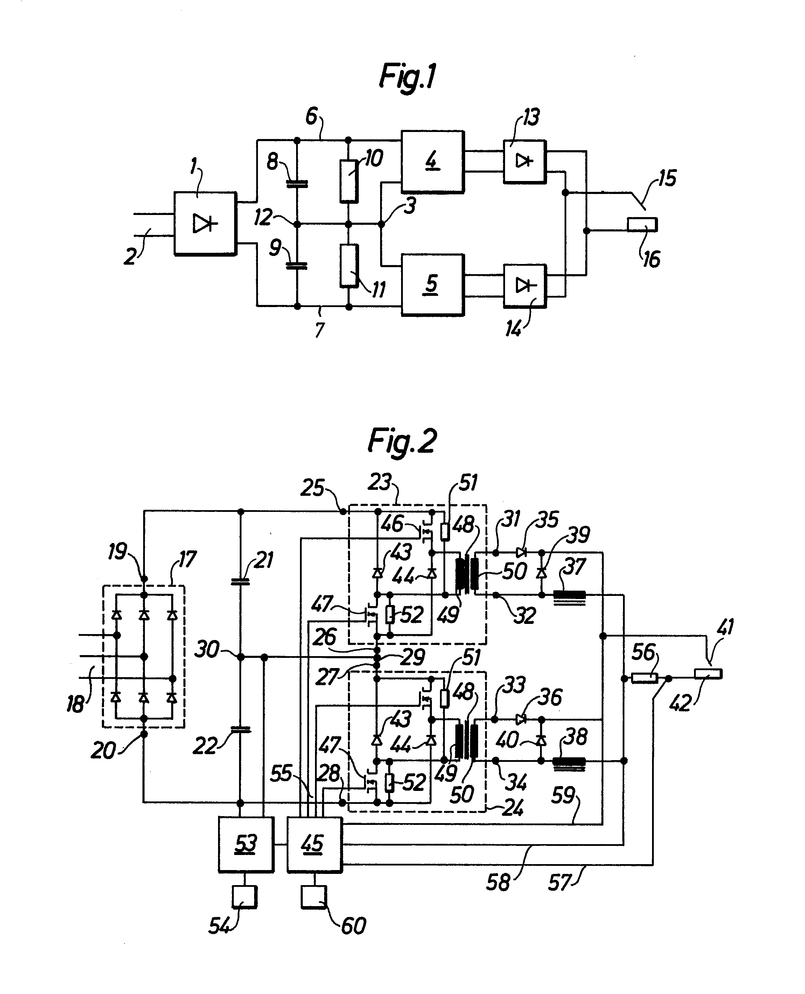

In Fig. 2 ist ein Dreiphasengleichrichter 17 dargestellt, der an ein Dreiphasennetz 18 angeschlossen ist. An den Ausgang 19, 20 des Gleichrichters sind zwei in Serie geschaltene Glättungskondensatoren 21, 22 und zwei mit ihren Eingängen 25, 26, 27, 28 in Serie geschaltene Wechselrichter 23, 24 angeschlossen. Die Eingänge 26, 27 sind durch eine Klemme 29 verbunden, die mit einer Klemme 30 der Verbindungsleitung der beiden Kondensatoren 21, 22 verbunden ist.

Die Ausgänge 31, 32, 33, 34 der Wechselrichter sind mit je einer Diode 35, 36 und je einem Schweissinduktor 37, 38 in Serie geschaltet. Eine Freilaufdiode 39, 40 je Ausgang übernimmt den Schweissstrom, wenn der Energiefluss vom Wechselrichter unterbrochen wird. Die beiden Ausgangskreise 35, 37, 39 bzw. 36, 38, 40 sind parallel geschaltet und an eine Schweisselektrode 41 und ein Werkstück 42 angeschlossen.

Die Schaltung der beiden Wechselrichter 23, 24 ist identisch und es wird daher nur einer der beiden Wechselrichter näher beschrieben. Die Teile der Wechselrichter 23, 24 sind mit den gleichen Bezugszeichen versehen. Der Wechselrichter 23 ist ein asymmetricher Halbbrückenwechselrichter. Zwei parallele Kreise enthalten je eine Diode 43, 44 und je ein von einem Steuergerät 45 steuerbares Halbleiterelement 46, 47. In der vorliegenden Schaltung werden MOS-Feldeffekttransistoren, auch kurz Mosfet genannt, als Halbleiterelemente verwendet, die im Gegensatz zu den normalen bipolaren Transistoren praktisch leistungslos gesteuert werden.

Der Mosfet besitzt einen positiven Temperaturkoeffizienten, d.h. sein Widerstand steigt mit zunehmender Temperatur. Der Mosfet kann daher, im Gegensatz zum bipolaren Transistor, ohne besondere Schaltelemente oder Hilfskreise parallel geschaltet werden, wobei sich der Strom im Verhältnis der Widerstände auf die parallelgeschaltenen Mosfets verteilt. Wegen des positiven Temperaturkoeffizienten können Überlastungen im Mosfet keine unkontrollierbare Stromzunahme verursachen, da lokale Erwärmungen im überlasteten Bereich des Mosfet zu einer entsprechenden Stromabnahme führen.

Bei den bipolaren Transistoren besteht die Gefahr einer solchen unkontrollierbaren Stromzunahme, da die bipolaren Transistoren einen negativen Temperaturkoeffizienten aufweisen. Der Mosfet besitzt somit gegenüber dem bipolaren Transistor einige Vorteile. Ein Nachteil ist jedoch die geringe Spannungsfestigkeit. Derzeit sind wohl Mosfets mit Sperrspannungen bis zu 800 V erhältlich. Diese Mosfets sind jedoch teuer, insbesondere für die hohen Ströme, für die Schweissstromquellen dimensioniert werden müssen. Es ist daher verständlich , dass die Verwendung von billiger Mosfets mit geringer Spannungsfestigkeit erstrebenswert ist.

Im vorliegenden Schaltbild ist lediglich je ein einziger Mosfet 46, 47 in Serie mit seiner Diode 43, 44 dargestellt. Im Hinblick auf die hohen Schweissströme und die oben erwähnte geringe Strombelastbarkeit eines einzelnen Mosfet müssen im allgemeinen mehrere Mosfets parallel geschaltet werden.

Die Primärwicklung 49 eines Transformators 48 ist zwischen den beiden Mosfet eingeschaltet. Widerstände 51, 52 sind zwischen einem Anschluss des Transformators 48 und den beiden Anschlüssen 25, 29 eingeschaltet. Die Sekundärwicklung 50 des Transformators ist direkt mit dem Ausgang 31, 32 des Wechselrichters verbunden. Die Widerstände 51, 52 in den beiden Wechselrichtern wirken in gleicher Weise wie dies oben für die Widerstände 10, 11 in Fig. 1 beschrieben wurde.

Die Gleichspannung des Gleichrichters 17 wird durch die beiden Widerstandspaare 51, 52, die den gleichen Widerstand haben, in zwei gleiche Teilspannungen zwischen den Klemmen 25, 29 und 29, 28 aufgeteilt. Das Potential der Anschlusspunkte 29, 30 liegt daher theoretisch zwischen den beiden Potentialen der Gleichrichterausgänge 19, 20. Geringfügige Schwankungen des Potentials der Anschlusspunkte 29, 30 werden jedoch beispielsweise durch verschiedene Impulslängen der Steuersignale an die Mosfets und durch unterschiedliche Ladungs- und Entladungsströme der Kondensatoren verursacht. Die Mosfets der beiden Wechselrichter 23, 24 werden somit nur der halben zwischen den Klemmen 25, 29 bzw. 29, 28 auftretenden Betriebsgleichspannung plus einem geringen Zuschlag für die auftretenden Potentialschwankungen der Klemme 29 ausgesetzt.

Infolge Fehler durch schadhafte Schaltelemente kann das Potential der Klemme 29 allerdings von seinem Betriebswert stark abweichen, wodurch die Spannung an einem der Wechselrichter derart erhöht werden kann, dass die Mosfets einer zerstörenden Überspannung ausgesetzt werden. Das Auftreten einer solchen Überspannung am Mosfet wird jedoch mit Hilfe eines Überwachungskreises vermieden. Die Spannung des Kondensators 22 wird in einem Komparator 53 mit einer mittels eines Stellers 54 eingestellten Spannung verglichen. Überschreitet die Differenz zwischen Kondensatorspannung und der eingestellten Spannung einen bestimmten Wert gibt der Komparator 53 ein Signal an das Steuergerät ab, das über die Steuerleitungen 55 die Mosfet 46, 47 sofort sperrt. Wenn der Strom durch die Mosfets unterbrochen ist, richtet sich die Aufteilung der Spannung nur nach den Widerständen 51, 52, die hier als gleich gross vorausgesetzt sind. Jeder Mosfet wird daher nur mit etwa einem Viertel der Gleichspannung zwischen den Ausgangsklemmen 19, 20 belastet, soferne die Kondensatoren fehlerfrei sind.

Wenn die unbelastete Schweissstromquelle an die Netzspannung angeschlossen wird, teilt sich im ersten Augenblick die Spannung zwischen den Klemmen 19, 20 auf die beiden Kondensatoren im umgekehrten Verhältnis zu deren Kapazität auf. Da die im Handel erhältlichen massenproduzierten Kondensatoren Kapazitätswerte aufweisen, die im Rahmen der zulässigen Toleranzen wesentlich von ihrem Nennwert abweichen können, ist zu erwarten, dass die Wechselrichter im Einschaltaugenblick nicht, wie vorgesehen an gleichen, sondern an stark unterschiedlichen Teilspannungen liegen werden. Nach kurzer Zeit werden sich allerdings die Teilspannungen auf einen Wert einstellen der durch die Widerstände 51, 52 in den Wechselrichtern 23, 24 bestimmt ist. Die Überspannungen im Einschaltaugenblick können zu einer Beschädigung der Mosfets führen. Es wäre nun möglich passende Kondensatoren mit gleichen Kapazitätswerten auszuwählen, was jedoch zusätzliche Kosten verursacht.

Da die Spannung des Kondensators 22 vom Komparator laufend überwacht wird führt eine Überspannung an einem der beiden Kondensatoren 21, 22 dazu, dass die Differenz zwischen der Spannung des Kondensators 22 und der am Stellgerät 54 des Komparators eingestellten Spannung einen vorgegebenen Wert überschreitet. Ein entsprechendes Ausgangssignal vom Komparator 53 an das Steuergerät 45 führt zu einer unmittelbaren Sperrung der Mosfets. Die Spannung über einen Mosfet kann somit im ungünstigen Fall - wenn z.B. einer der beiden Kondensatoren 21, 22 schadhaft und kurzgeschlossen ist - höchstens die Hälfte der Spannung zwischen der Klemmen 19, 20 ausmachen, da, wie oben vorausgesetzt, die Widerstände 51, 52 gleich gross sind.

Es ist auch denkbar das Potential der Klemme 19 ebenfalls an einen Eingang des Komparators anzuschliessen und in diesem die Spannungen an beiden Kondensatoren 21 mit einer vorgegebenen Spannung zu vergleichen.

An einem Shunt 56 wird eine dem Schweissstrom entsprechende Spannung abgegriffen, die zusammen mit der Schweissspannung über Leitungen 51, 58, 59 dem für beide Wechselrichter gemeinsammen Steuergerät 45 zugeführt werden. An das Steuergerät ist ein Steller 60 für die Einstellung des Sollwertes von Schweissstrom und/oder Schweissspannung vorgesehen. Im Gegensatz zu der hier gezeigten Darstellung ist es auch denkbar jeden Wechselrichter mit einem eigenen Steuergerät zu versehen.

Die beiden Wechselrichter 23, 24 werden zweckmässigerweise vom Steuergerät als pulsbreitenmodulierte Wechselrichter, im Gegentakt betrieben. Die Wechselrichter geben dabei an ihren Ausgängen 31, 32 bzw. 33, 34 wechselweise Spannungsimpulse von bestimmter Länge ab. Wenn die Wechelsrichter derart belastet werden, hat es sich als vorteilhaft erwiesen, die Wechselrichter 23, 24 mit je ihrem Gleichrichter 35, 36 je ihrem Schweissinduktor 37, 38 und je ihrer Freilaufdiode 39, 40 zu beschalten, bevor die
beiden Wechselrichter parallel geschaltet und an die
gemeinsame Schweissstelle 41, 42 angeschlossen werden.

Patentansprüche:

1.     Schweissstromquelle für das Lichtbogenschweissen mit einem an ein Wechselstromnetz anschliessbaren Gleichrichter (1; 17), einer an dessen Gleichstromklemmen angeschlossenen Parallelschaltung  bestehend aus einer Glättungskondensatoreinrichtung (8, 9; 21, 22) und einer Wechselrichtereinrichtung (4, 5; 23, 24) für die Umwandlung der Gleichspannung in eine Wechselspannung deren Frequenz wesentlich höher als die Netzfrequenz ist, wobei die Wechselrichtereinrichtung (4, 5; 23, 24) mit Halbleiterelementen (46, 47), die von einem Steuergerät (45) gesteuert werden, und mit einer Transformatoreinrichtung (48) für die galvanische Trennung des Einganges der Wechselrichtereinrichtung von ihrem Ausgang ausgerüstet ist, an den nach fakultativer Serienschaltung eines Gleichrichters (13, 14; 35, 36) eine aus  einem Werkstück und einer Schweisselektrode gebildete Schweissstelle anschliessbar ist, dadurch gekennzeichnet, dass die Wechselrichtereinrichtung aus zwei oder mehreren Wechselrichtern (4, 5; 21, 22) besteht, deren Eingänge in Serie geschaltet sind, und dass die Glättungskondensatoreinrichtung  als Spannungsteiler dient, der aus zwei oder mehreren seriengeschalteten Kondensatoren (8, 9; 21, 22) besteht, wobei zwischen den Kondensatoren angeordnete Anschlüsse (12; 30) mit entsprechenden Anschlüssen (3; 29) zwischen den in Serie geschalteten Wechselrichtern verbunden sind.

2.     Schweissstromquelle nach Patentanspruch 1, dadurch gekennzeichnet,  dass zu jedem Glättungskondensator (8, 9; 21, 22) ein Widerstand (10, 11; 51, 52) parallel geschaltet ist.

3.     Schweissstromquelle nach Patentanspruch 2, dadurch gekennzeichnet,  dass der Widerstand (51, 52) einen Teil des Wechselrichters (23, 24) bildet.

4.    Schweissstromquelle nach einem der Patentansprüche 1 bis 3, dadurch gekennzeichent, dass die Eingänge (25, 26; 27, 28) von zwei gleichartigen Wechselrichtern (23, 24) in Serie geschaltet sind und Steuergeräte (45) der beiden Wechselrichter für die Steuerung der Halbleiterelemente zur wechselweisen Erzeugung von Spannungspulsen an den beiden Ausgängen der beiden Wechselrichtertransformatoren (48) vorgesehen sind, wobei zwischen jedem Ausgang (31, 32; 33, 34) und der Schweissstelle (41, 42) ein Stromkreis bestehend aus einer Serienschaltung von Gleichrichter (35, 36) und Schweissinduktor (37, 38) und einer mit dem Schweissinduktor zusammenwirkenden Freilaufdiode (39, 40) eingeschaltet ist.

5.    Stromquelle nach Patentanspruch 4, dadurch gekennzeichnet, dass ein Komparator (53) für den Vergleich der Teilspannung des Spannungsteilers (21, 22) an einem Wechselrichter (24) mit einer an einem Stellgerät (54) einstellbaren Spannung und für die Erzeugung eines der Spannungsdifferenz zwischen der Teilspannung und der eingestellten Spannung entsprechenden an das Steuergerät (45) zuführbaren Ausgangssignals vorgesehen ist, wobei das Steuergerät (45) die Halbleiterelemente (46, 47) sperrt, wenn das Ausgangssignal einer Spannungsdifferenz entspricht, die grösser ist als ein vorgegebener Wert.

6.    Stromquelle nach einem der Patentansprüche 1 bis 5, dadurch gekennzeichnet, dass die vom Steuergerät (45) gesteuerten Halbleiterelemente MOS-Feldeffekttransistoren (46, 47) sind.

## Fig.1

## Fig.2